# EUROPÄISCHE PATENTSCHRIFT

(11) **EP 1 214 873 B1**
(45) Veröffentlichungstag und Bekanntmachung des Hinweises auf die Patenterteilung: **16.02.2005**
(21) Anmeldenummer: 01128206.8
(22) Anmeldetag: 28.11.2001
(51) Int. Cl.: A01F 12/10

(54) **Einlauf einer Axialdreschmaschine**
Crop delivering system for an axial-flow combine
Dispositif d'introduction pour moissonneuse à écoulement axial

(30) Priorität: 14.12.2000 DE 10062429
(43) Veröffentlichungstag der Anmeldung: 19.06.2002
(73) Patentinhaber: CLAAS Selbstfahrende Erntemaschinen GmbH, 33428 Harsewinkel (DE)
(72) Erfinder: Schwersmann, Berthold, 49186 Bad Iburg (DE)

(56) Entgegenhaltungen:
- EP-A- 0 230 276
- DE-A- 2 430 304
- DE-A- 19 722 079
- FR-A- 2 527 899
- US-A- 4 250 896
- US-A- 4 900 290
- US-A- 5 145 461

## Beschreibung

Die Erfindung betrifft eine selbstfahrende Erntemaschine gemäß dem Oberbegriff des Anspruchs 1. Derartige als Mähdrescher ausgeführte landwirtschaftliche Erntemaschinen können sowohl nach dem reinen Axialverfahren oder dem gemischten System, bei dem Tangential-Dreschwerke mit axial wirkenden Trenneinrichtungen kombiniert sind, arbeiten.

So ausgeführte Mähdrescher sind in der Regel mit einem einzigen, oder mehreren parallel nebeneinander liegenden, mit inneren Führungsleisten besetzten, zumindest bereichsweise als Sieb- oder Lochfläche ausgebildeten Rotorgehäusen ausgestattet, wobei ein jedes dieser Gehäuse einen Trennrotor aufnimmt, dessen vorderes Ende für die Gutannahme mit Förderschneckenabschnitten bestückt ist, und auf dessen Außenmantel Förderelemente angeordnet sind, die im Zusammenwirken mit den im Rotorgehäuse angebrachten Führungsleisten das Erntegemisch aus Korn, Stroh und Spreu zwischen Trennrotor und Gehäuse zum rückwärtigen Ende des Trennrotors transportieren, wobei insbesondere die Körner aus dem Gemisch ausgeschieden werden. Am Guteinlaufende stützt sich die Achse derartiger Trennrotoren in einer, den Gehäusequerschnitt teilweise verschließenden, sich bis über die Mittelachse des Rotorgehäuses hinaus, nach unten erstreckende Stirnwand ab, deren untere Kante die verbleibende Guteinlauföffnung nach oben hin begrenzt.

Gemäß dem deutschen Patent DE 24 30 304 verläuft bei derartigen Axial-Dresch- und / oder Trenneinrichtungen die untere Kante der Stirnwand waagerecht von einer zur anderen Seite des zylindrischen Rotorgehäuses. Der Trennrotor ist derart im Rotorgehäuse gelagert, dass die Förderflügel der Förderschneckenabschnitte bis in die Guteinlauföffnung ragen und mit ihren Vorderkanten bis nahe der Innenfläche der Stirnwand stehen.

Die in dieser Form bekannte, bereichsweise, stirnseitige Verschließung der Guteinlauföffnung des Rotorgehäuses mittels einer Stirnwand bewirkt zum einen, eine sich positiv auf den Trennungsprozess auswirkende, erhöhte Luftströmungsgeschwindigkeit innerhalb der Trenneinheit, schränkt jedoch den störungsfreien Einzug des Erntegutes ganz erheblich ein.
Aufgrund der Drehbewegung des Trennrotors wird das Gutgemisch verstärkt in dem Bereich der untenseitigen Kante der Stirnwand der der Drehrichtung des Trennrotors entgegensteht eingezogen.

Bei nahezu waagerechtem Verlauf dieser untenseitigen Kante der Stirnwand ist die Guteinlassöffnung unterhalb derselben derart eingeschränkt, dass es zwangsläufig zu erheblichen Störungen im Gutfluss führt, sogar ein völliges Blockieren der Gutübergabe zur Folge haben kann. Desweiteren konnte wiederholt festgestellt werden, dass die Stirnwand und insbesondere die entgegenstehende Kante selbst, den zum Teil extremen Belastungen nicht ausreichend wiedersteht. Durch das Vorbeistreichen der Förderflügel an der der Drehrichtung des Trennrotors entgegenstehenden Kante der Stirnwand werden die zum Teil noch langstängeligen Pflanzenteile von den Förderflügeln erfasst. Das Erntegut wird dabei in seiner Flussrichtung abrupt umgelenkt und zum Teil mit extremen Belastungsspitzen über die Kante in das Fördergehäuse eingezogen, sodass Deformationen oder zumindest Verspannungen an der Stirnwand auftreten, die sich insbesondere negativ auf den Trennrotor und dessen Lagerung auswirken.

Aufgabe der Erfindung ist es deshalb, die aus dem Stand der Technik bekannten Störungen zu vermeiden.

Gelöst wir die Aufgabenstellung gemäß den kennzeichnenden Merkmalen des Anspruchs 1. Indem wenigstens eine der unteren Kanten einer Stirnwand im Bereich der Lagerung des Trennrotors eine von der Horizontalen abweichende Position einnimmt, wird sichergestellt, dass der Guteintrittsbereich am in Fahrtrichtung vorn liegenden Ende des jeweiligen Trennrotors so vergrößert wird, dass ein verschleißfördernder Gutstau in diesem Eintrittsbereich ausbleibt.

Zur Realisierung großer Durchsätze kann dem wenigsten einen Trennrotor ein weiter wenigstens teilweise von einem Gehäuse umgebener Trennrotor zugeordnet sein, der an seinem in Fahrtrichtung weisenden Ende ebenfalls mittels Lager in einer mit den erfindungsgemäßen unteren Kanten versehenen weiteren Seitenwand gelagert ist.

Um auch große Erntegutmengen störungsfrei annehmen zu können, sind in einer vorteilhaften Weiterbildung der Erfindung die unteren Kanten der Stirnwände in einem stumpfen Winkel zueinander angeordnet, sodass der Guteintrittsbereich am forderen Ende der Trennrotoren größer als der von den Stirnwänden abgeschirmte Bereich ist.

Um ein besonders einfaches Abstreifen des von dem jeweiligen Trennrotor anzunehmenden Erntegutes in dem sich zwischen den unteren Kanten der Stirnwände und den umlaufenden Trennrotoren bildenden Einzugsspalten zu erreichen, können die unteren Kanten der Stirnwände auch bogenförmig ausgebildet sein. Auf diese Weise wird sichergestellt, dass sich zwischen diesen unteren Kanten der Stirnwände und den Mitnahmeelementen der Trennrotoren befindliches Erntegut sicher in radialer Richtung des Trennrotors aus diesem sich bildenden Einzugsspalt herausbringbar ist.

In besonders vorteilhafter Weise kann die Annahme von großen Erntegutmengen ohne Gutstauproblem im Einzugsbereich der Trennrotoren dann gewährleistet werden, wenn die Krümmung der bogenförmigen unteren Kanten der Stirnwände in vertikaler Richtung nach oben verläuft.

Ferner wird die Erntegutannahme immer dann positiv beeinflusst, wenn die unteren Kanten der Stirnwände zueinander versetzt angeordnet sind und die der Drehrichtung des jeweiligen Trennrotors entgegengerichtete untere Kante der jeweiligen Stirnwand in vertikaler Richtung stärker angestellt ist.

Sind wenigstens zwei Trennrotoren zur Annahme des von den vorgeordneten Arbeitsorganen abgegebenen Erntegutstranges vorgesehen ist unter dem Gesichtspunkt einer energetisch günstigen Aufteilung des Erntegutstromes und unter dem Gesichtspunkt des kostengünstigen Einsatzes einer großen Anzahl von Gleichteilen, die spiegelbildliche Anordnung der einander benachbarten Stirnwände von Vorteil, wobei die Trennrotoren entsprechend mit entgegengesetzter Drehrichtung umlaufen.

Um die Verschleißfestigkeit der unteren Kanten der Stirnwände zu erhöhen, können diese in einer vorteilhaften Weiterbildung der Erfindung in der Weise profiliert ausgeführt sein, dass die erfindungsgemäßen unteren Kanten eine größere Materialanhäufung aufweisen.

Um die einenends mit den Lagerungen in Wirkverbindung stehenden unteren Kanten der Stirnwände gleichzeitig zur Durchleitung an sich bekannter Schmiersysteme für die Lagerungen einzusetzen, können die unteren Kanten der Stirnwände auch hohlprofilförmig ausgebildet sein und in ihrem Inneren über Schmierkanäle verfügen, über die den Lagerungen verschleißreduzierende Schmiermittel zugeführt werden können.

In einer weiteren vorteilhaften Ausgestaltung der Erfindung können den Stirnwänden innenseitig Abstreiferleisten zugeordnet sein, die das Abtransportieren des Erntegutes aus dem Einzugsbereich des jeweiligen Trennrotors unterstützen, wobei der Gutableitungsprozess dadurch noch forciert werden kann, dass die Abstreifleisten in Drehrichtung des jeweiligen Trennrotors gekrümmt ausgeführt sind.

Weitere vorteilhafte Ausgestaltungen sind Gegenstand weiterer Unteransprüche und werden nachfolgend an Hand von Zeichnungen näher erläutert.

Es zeigen
- Figur 1: den vorderen Bereich einer als Mähdreschers ausgeführten selbstfahrenden Erntemaschine in der Seitenansicht,
- Figur 2: den einlaufseitigen Teil einer doppelrotorigen Trenneinrichtung des Mähdreschers mit erfindungsgemäßen Stirnwänden in dreidimensionaler Ansicht
- Figur 3: eine Vorderansicht auf paarweise angeordnete Trennrotoren mit erfindungsgemäßen Stirnwänden
- Figur 4: ein Schnitt durch eine erfindungsgemäße untere Kante einer Stirnwand gemäß der Linie IV - IV in Figur 2.

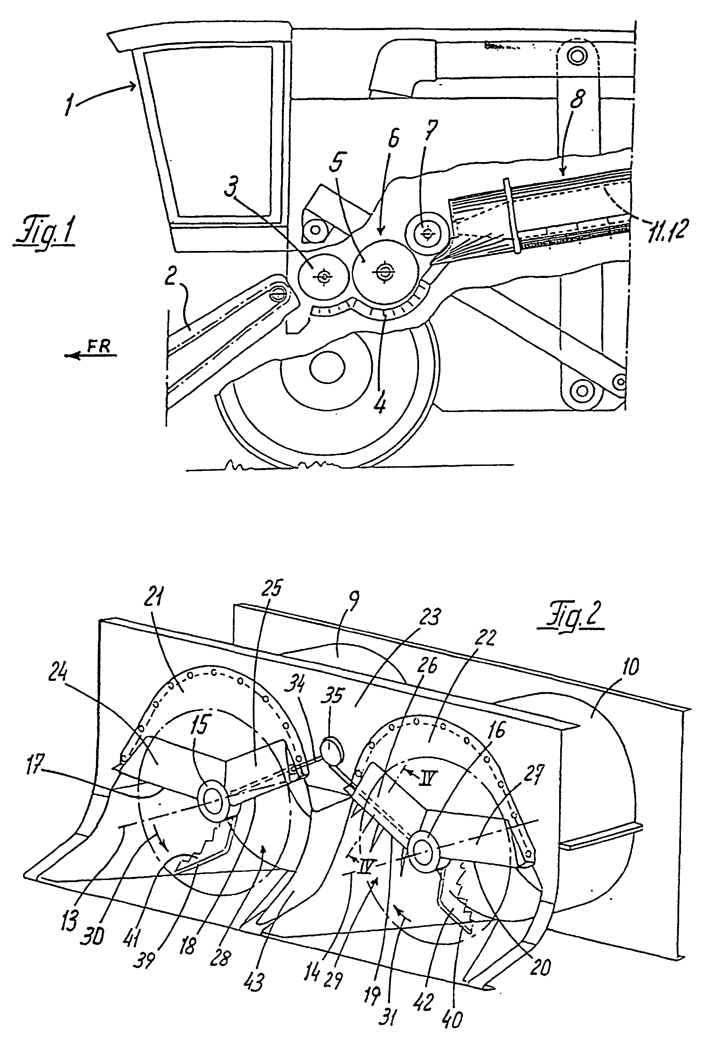

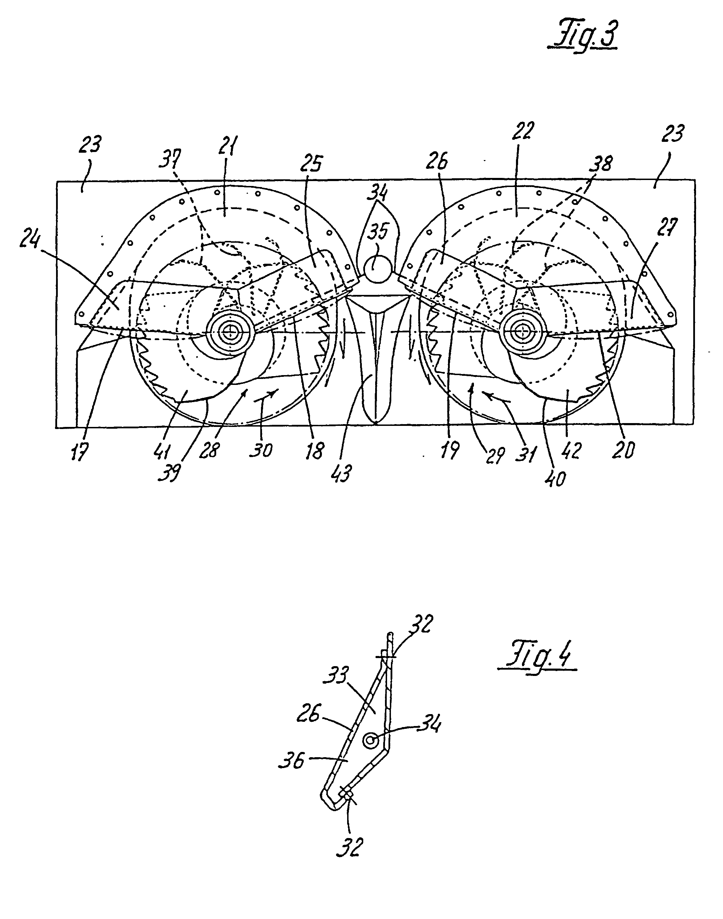

Mit 1 ist der vordere Teil eines selbstfahrenden Mähdreschers bezeichnet, der in bekannter Weise einen Schrägförderer 2 aufweist, von dem das Erntegut über einen Vorbeschleuniger 3 dem aus Dreschkorb 4 und Dreschtrommel 5 gebildeten Dreschwerk 6 zugeführt wird. Das aus dem Dreschwerk 6 austretende gedroschene Erntegut wird dann über eine Übergabetrommel 7 einer aus zwei in Fahrtrichtung FR zueinander parallel angeordneten Rotorgehäusen 9 und 10 bestehenden Axialtrenneinrichtung 8 zugeführt. Den Rotorgehäusen sind in an sich bekannter und deshalb nicht näher dargestellter Weise innenseitig Führungsleisten zugeordnet, die den Transport des Erntegutstranges in den rückwärtigen Bereich der Axialtrenneinrichtung 8 unterstützen. Die Rotorgehäuse 9, 10 ummanteln wie in Fig. 2 strichpunktiert dargestellt, zumindest teilweise je einen in den Rotorgehäusen 9, 10 antreibbar gelagerten Trennrotor 11, 12. Die Achsen 13, 14 der Trennrotoren 11, 12 werden an ihren in Fahrtrichtung FR weisenden frontseitigen Enden in Lagern 15, 16 drehbar aufgenommen, wobei die Lager 15, 16 ihrerseits in noch näher zu beschreibender Weise drehfest mit den erfindungsgemäßen unteren Kanten 17-20 der Stirnwände 21, 22 verbunden sind. Die die Lager 15, 16 aufnehmenden haubenförmig ausgeführten Stirnwände 21, 22 sind in ihrem rückwärtigen Bereich lösbar an einer den Guteinlaufbereich von den Trennrotoren 11, 12 abgrenzenden Frontplatte 23 befestigt, wobei die Frontplatte 23 untenseitig dem Durchmesser der vorgeordneten Übergabetrommel 7 angepasst ist und in ihrem rückwärtigen Bereich von den frontseitigen Enden der Rotorgehäuse 9, 10 aufgenommen wird. Zur Minimierung des Verschleißes der unteren Kanten 17-20 der Stirnwände 21, 22 sind im Bereich der unteren Kanten 17-20 Verstärkungsprofile 24-27 auf die Stirnwände 21, 22 aufgeschweißt. Im einfachsten und deshalb nicht näher dargestellten Fall werden diese Versteifungsprofile 24-27 von dickwandigen Metallplatten gebildet. Damit die mit ihrem Einzugsbereich die Frontplatte 23 durchsetzenden Trennrotoren 11, 12 im Zusammenwirken mit den diesen Einzugsbereich zumindest teilweise abschirmenden Stirnwänden 21, 22 dennoch einen störungsfreien Einzug des Erntegutes ermöglichen, sind die unteren Kanten 17-20 der Stirnwände 21, 22 in erfindungsgemäßer Weise so ausgeführt, dass sie sich in einer von der Horizontalen abweichende Lage entlang dem untenseitigen Ende der Stirnwände 21, 22 erstrecken. Es liegt im Rahmen der Erfindung, dass auch nur eine der unteren Kanten 17-20 eine von der Horizontalen abweichende Lage einnimmt, um einen störungsfreien Einzug des Erntegutes zu gewährleisten.

Um die von den unteren Kanten 17-20 der Stirnwände 21, 22 begrenzten Einzugsöffnungen 28, 29 für eine störungsfrei Gutannahme möglichst groß zu halten, sind die unteren Kanten 17-20 der Stirnwände 21, 22 so zueinander angeordnet, dass sie zwischen sich einen stumpfen Winkel α aufspannen.

Damit das Einklemmen von Erntegut im Bereich zwischen dem frontseitigen Ende der Trennrotoren 11, 12 und den unteren Kanten 17-20 der Stirnwände 21, 22 vermieden wird, können die unteren Kanten 17-20 gemäß Fig. 3 auch bogenförmig ausgeführt sein, wobei sich die Krümmung dieser bogenförmig ausgeführten unteren Kanten 17-20 in vertikaler Richtung nach oben erstreckt. Abweichend von dem dargestellten Ausführungsbeispiel wäre es auch denkbar nur eine der unteren Kanten 17-20, nämlich die der Drehrichtung 30, 31 entgegenstehende untere Kante 18, 19 bogenförmig auszuführen um das beschriebene Einklemmen von Erntegut während des Einzugsvorganges zu vermeiden.

Damit das von den Trennrotoren 11, 12 anzunehmende Erntegut verschleißfördernde Stoßbelastungen vermeidend in die Trennrotoren 11, 12 einlaufen kann, können die unteren Kanten 17-20 der jeweiligen Stirnwand 21, 22 in Drehrichtung 30, 31 der Trennrotoren 11, 12 zueinander versetzt angeordnet sein, sodass ein möglichst großer Einlaufbereich am frontseitigen Ende der Trennrotoren 11, 12 für das Erntegut realisierbar ist. Dies wird auf besonders einfache Weise dadurch erreicht, dass die der Drehrichtung 30, 31 des jeweiligen Trennrotors 11, 12 entgegenstehende untere Kante 18, 19 der entsprechenden Stirnwand 21, 22 in vertikaler Richtung stärker angestellt ist als die jeweils andere untere Kante 17, 20 der zugehörigen Stirnwand 21, 22.

Damit der von der Übergabetrommel 7 in an sich bekannter und deshalb nicht näher dargestellter Weise etwa mittig getrennte Erntegutstrom störungsfrei an die Trennrotoren 11, 12 im Bereich der Frontplatte 23 übergeben werden kann und von diesen zügig abgefördert wird, sind in einer weiteren vorteilhaften Ausgestaltung der Erfindung die Trennrotoren mit ihren frontseitig angeordneten erfindungsgemäßen Stirnwänden 21, 22 spiegelbildlich zueinander angeordnet, wobei die den Einlaufbereich bildenden in vertikaler Richtung steiler angestellten unteren Kanten 18, 19 einander zugewandt sind und die Trennrotoren 11, 12 mit entgegengesetzter Drehrichtung 30, 31 umlaufen. Die Aufteilung des Erntegutstromes auf die Trennrotoren 11, 12 wird auch dadurch noch unterstützt, dass der die Rotorgehäuse 9, 10 aufnehmenden Trennwand 23 im Bereich zwischen den Trennrotoren 11, 12 ein Guttrennkeil 43 angeformt ist, der zumindest die von den unteren Kanten 18, 19 begrenzten Einführbereiche der zueinander benachbart angeordneten Trennrotoren 11, 12 voneinander trennt.

In einer weiteren vorteilhaften Ausgestaltung können die auf die unteren Kanten 17-20 aufgebrachten Verstärkungsprofile 24-27 gemäß den Figuren 2 und 4 auch profilförmig ausgebildet sein, um die im Einzugsbereich der Trennrotoren 11, 12 auftretenden hohen Belastungen besser aufnehmen zu können. Um den verschleißbedingten Wechsel der unteren Kanten 17-20 der Stirnwände 21, 22 auf den verschlissenen Bereich der Versteifungsprofile 24-27 beschränken zu können, sind die Verstärkungsprofile 24-27 in einer weiteren erfindungsgemäßen Ausführungsform lösbar an den jeweiligen Stirnwänden 21, 22 mittels Schraubverbindungen 32 befestigt, wobei die Versteifungsprofile 24-27 so geformt sein können, dass sich zwischen den Versteifungsprofilen 24-27 und der jeweiligen Stirnwand 21, 22 ein Hohlraum 33 ergibt. In bauraumsparender Weise können diese Hohlräume 33 von Leitungssystemen 34 durchsetzt sein, die von einem Vorratsbehälter 35 beispielsweise einer an sich bekannten Zentralschmiereinrichtung Schmiermittel in den Bereich der Lager 15, 16 fördern, sodass die Hohlräume 33 der Versteifungsprofile 24-27 als Schmierkanäle 36 ausgebildet sind. Um die Schmierwirkung zu erhöhen kann auch in nicht dargestellter Weise jedem der Versteifungsprofile 24-27 ein derartiges Leitungssystem 34 zugeordnet sein.

In einer weiteren vorteilhaften Ausgestaltung der Erfindung sind den Stirnwänden innenseitig Abstreiferleisten 37, 38 zugeordnet, die das Abfördern von in dem haubenförmigen Bereich der Stirnwände 21, 22 befindlichen Erntegut unterstützen. Um den Effekt des Abförderns weiter zu erhöhen weisen die Abstreiferleisten 37, 38 in Drehrichtung 30, 31 des jeweiligen Trennrotors 11, 12 und sind von bogenförmiger Gestalt. Es liegt im Rahmen der Erfindung, dass jeder Stirnwand 21, 22 auch nur eine Abstreifleiste 37, 38 zugeordnet sein kann, die zudem nicht bogenförmig sondern gerade ausgeführt ist.

Die Abförderbewegung des Erntegutes aus dem Bereich der Stirnwände 21, 22 wird vor allem dadurch realisiert, dass die stirnseitigen Kanten 39, 40 der Rotorschneckenbleche 41, 42 beim Umlauf der Trennrotoren 11, 12 mit geringem Abstand die Abstreifleisten 37, 38 überstreichen und dabei das in dem Bereich zwischen den Stirnwänden 21, 22 und den vorderen Enden der Rotorschneckenbleche 41, 42 befindliche Erntegut aus diesem Bereich herausfördern.

Die offenbarte Erfindung ist nicht auf Ausführungen mit zwei Trennrotoren 11, 12 gemäß dem Ausführungsbeispiel beschränkt sondern kann an über eine beliebige Anzahl von Trennrotoren 11, 12 verfügenden landwirtschaftlichen Arbeitsmaschinen eingesetzt werden, um die beschriebenen Effekte zu erzielen.

### Bezugszeichenliste

- 1: Mähdrescher
- 2: Schrägförderer
- 3: Vorbeschleuniger
- 4: Dreschkorb
- 5: Dreschtrommel
- 6: Dreschwerk
- 7: Übergabetrommel
- 8: Axialtrenneinrichtung
- 9: Rotorgehäuse
- 10: Rotorgehäuse
- 11: Trennrotor
- 12: Trennrotor
- 13: Rotorachse
- 14: Rotorachse
- 15: Lager
- 16: Lager
- 17-20: untere Kanten
- 21: Stimwand
- 22: Stirnwand
- 23: Frontplatte
- 24-27: Versteifungsprofile
- 28: Einzugsöffnung
- 29: Einzugsöffnung
- 30: Drehrichtung
- 31: Drehrichtung
- 32: Schraubverbindung
- 33: Hohlraum
- 34: Leitungssystem
- 35: Vorratsbehälter
- 36: Schmierkanal
- 37: Abstreiferleiste
- 38: Abstreiferleiste
- 39: stirnseitige Kante
- 40: stirnseitige Kante
- 41: Rotorschneckenblech
- 42: Rotorschneckenblech
- 43: Guttrennkeil

- FR: Fahrtrichtung
- α: Winkel

## Patentansprüche

1. Selbstfahrende Erntemaschine, insbesondere ein Mähdrescher mit wenigstens einem zumindest teilweise in einem Rotorgehäuse angeordneten und antreibbaren Trennrotor, dessen in Fahrtrichtung vorn liegendes Ende in einer die Rotorgehäuseeingangsöffnung bereichsweise abdeckenden Stirnwand von wenigstens einem Lager aufgenommen wird,
**dadurch gekennzeichnet,**
**dass** zumindest eine der von dem wenigstens einen Lager (15, 16) nach außen verlaufenden unteren Kanten (17-20) einer Stirnwand (21, 22) eine von der Horizontalen abweichende Lage einnimmt.

2. Selbstfahrende Erntemaschine nach Anspruch 1,
**dadurch gekennzeichnet,**
**dass** dem wenigstens einen Trennrotor (11) zumindest ein weiterer, von einem Rotorgehäuse (10) umgebener Trennrotor (12) zugeordnet ist und der wenigstens eine weitere Trennrotor (12) an seinem in Fahrtrichtung FR weisenden Ende von wenigstens einem mit einer untere Kanten (29, 30) aufweisenden Stirnwand (22) verbundenen Lager (16) aufgenommen wird.

3. Selbstfahrende Erntemaschine nach einem oder mehreren der vorhergehenden Ansprüche,
**dadurch gekennzeichnet,**
**dass** die beiden unteren Kanten (17, 18 und 19, 20) einer jeden Stirnwand (21, 22) einen stumpfen Winkel (α) einschließen.

4. Selbstfahrende Erntemaschine nach einem oder mehreren der vorhergehenden Ansprüche,
**dadurch gekennzeichnet,**
**dass** wenigstens eine der unteren Kanten (17-20) bogenförmig ausgebildet ist.

5. Selbstfahrende Erntemaschine nach Anspruch 4,
**dadurch gekennzeichnet,**
**dass** die Krümmung wenigstens einer der bogenförmigen unteren Kanten (17-20) in vertikaler Richtung nach oben verläuft.

6. Selbstfahrende Erntemaschine nach einem oder mehreren der vorhergehenden Ansprüche,
**dadurch gekennzeichnet,**
**dass** die unteren Kanten (17-20) der Stirnwände (21, 22) des jeweiligen Trennrotors (11, 12) in Drehrichtung (30, 31) des jeweiligen Trennrotors (11, 12) zueinander versetzt angeordnet sind.

7. Selbstfahrende Erntemaschine nach Anspruch 6,
**dadurch gekennzeichnet,**
**dass** die der Drehrichtung (30, 31) des jeweiligen Trennrotors (11, 12) entgegengerichtete untere Kante (18, 19) stärker in vertikaler Richtung angestellt ist als die dieser unteren Kante (18, 19) in Drehrichtung (30, 31) des jeweiligen Trennrotors (11, 12) nachlaufende untere Kante (17, 20).

8. Selbstfahrende Erntemaschine nach einem oder mehreren der vorhergehenden Ansprüche,
**dadurch gekennzeichnet,**
**dass** die Stirnwand (21) eines ersten Trennrotors (11) mit ihren unteren Kanten (17, 18) und die Stirnwand (22) eines zweiten Trennrotors (12) mit ihren unteren Kanten (19, 20) spiegelbildlich zueinander angeordnet sind.

9. Selbstfahrende Erntemaschine nach einem oder mehreren der vorhergehenden Ansprüche,
**dadurch gekennzeichnet,**
**dass** die Stirnwände (21, 22) im Bereich ihrer unteren Kanten (17-20) im Querschnitt profiliert ausgebildet sind.

10. Selbstfahrende Erntemaschine nach Anspruch 9,
**dadurch gekennzeichnet,**
**dass** die unteren Kanten (17-20) hohlprofilförmig ausgebildet sind.

11. Selbstfahrende Erntemaschine nach einem oder mehreren der vorhergehenden Ansprüche,
**dadurch gekennzeichnet,**
**dass** die unteren Kanten (17-20) der Stirnwände (21, 22) durch auf die Stirnwände (21, 22) aufgesetzte Verstärkungsprofile (24, 25 bzw. 26, 27) gebildet werden.

12. Selbstfahrende Erntemaschine nach Anspruch 9,
**dadurch gekennzeichnet,**
**dass** die Verstärkungsprofile (24-27) hohl ausgebildet sind.

13. Selbstfahrende Erntemaschine nach einem oder mehreren der vorhergehenden Ansprüche,
**dadurch gekennzeichnet,**
**dass** die Hohlräume (33) der Verstärkungsprofile (24-27) als Schmierkanäle (36) ausgebildet sind.

14. Selbstfahrende Erntemaschine nach einem oder mehreren der vorhergehenden Ansprüche,
**dadurch gekennzeichnet,**
**dass** die Stirnwände (21, 22) auf ihrer Innenseite mit wenigstens einer Abstreiferleiste (37, 38) besetzt sind.

15. Selbstfahrende Erntemaschine nach einem oder mehreren der vorhergehenden Ansprüche,
**dadurch gekennzeichnet,**
**dass** die Abstreiferleisten (37, 38) in Drehrichtung (30, 31) des ihnen zugeordneten Trennrotors (11, 12) weisend angeordnet sind.

16. Selbstfahrende Erntemaschine nach Anspruch 15,
**dadurch gekennzeichnet,**
**dass** die Abstreifleisten (37, 38) gerade oder gekrümmt ausgebildet sind.

17. Selbstfahrende Erntemaschine nach einem oder mehreren der vorhergehenden Ansprüche,
**dadurch gekennzeichnet,**
**dass** die stirnseitigen Kanten (39, 40) der Rotorschneckenbleche (41, 42) mit den Abstreiferleisten (37, 38) im Sinne der Förderung des Erntegutes nach außen zusammenwirken.

## Claims

1. A self-propelled harvester, in particular a combine harvester, having at least one drivable separating rotor which is arranged at least partially in a rotor housing and whose end which is at the front in the direction of travel is supported by at least one bearing in an end wall which covers the rotor housing entrance opening in region-wise fashion, **characterised in that** at least one of the lower edges (17-20) of an end wall (21, 22), which edges extend outwardly from the at least one bearing (15, 16), assumes a position which differs from the horizontal.

2. A self-propelled harvester according to claim 1 **characterised in that** associated with the at least one separating rotor (11) is at least one further separating rotor (12) surrounded by a rotor housing (10) and the at least one further separating rotor (12) at its end facing in the direction of travel FR is supported by at least one bearing (16) connected to an end wall (22) having lower edges (29, 30).

3. A self-propelled harvester according to one or more of the preceding claims **characterised in that** the two lower edges (17, 18 and 19, 20) of each end wall (21, 22) include an obtuse angle (α).

4. A self-propelled harvester according to one or more of the preceding claims **characterised in that** at least one of the lower edges (17-20) is of an arcuate configuration.

5. A self-propelled harvester according to claim 4 **characterised in that** the curvature of at least one of the arcuate lower edges (17-20) extends upwardly in a vertical direction.

6. A self-propelled harvester according to one or more of the preceding claims **characterised in that** the lower edges (17-20) of the end walls (21, 22) of the respective separating rotor (11, 12) are arranged displaced relative to each other in the direction of rotation (30, 31) of the respective separating rotor (11, 12).

7. A self-propelled harvester according to claim 6 **characterised in that** the lower edge (18, 19) which is directed in opposite relationship to the direction of rotation (30, 31) of the respective separating rotor (11, 12) is set more greatly in the vertical direction than the lower edge (17, 20) trailing said lower edge (18, 19) in the direction of rotation (30, 31) of the respective separating rotor (11, 12).

8. A self-propelled harvester according to one or more of the preceding claims **characterised in that** the end wall (21) of a first separating rotor (11) with the lower edges (17, 18) thereof and the end wall (22) of a second separating rotor (12) with the lower edges (19, 20) thereof are arranged in mirror image relationship with each other.

9. A self-propelled harvester according to one or more of the preceding claims **characterised in that** the end walls (21, 22) are of a profiled configuration in cross-section in the region of their lower edges (17-20).

10. A self-propelled harvester according to claim 9 **characterised in that** the lower edges (17-20) are of a hollow profile-shaped configuration.

11. A self-propelled harvester according to one or more of the preceding claims **characterised in that** the lower edges (17-20) of the end walls (21, 22) are formed by reinforcing profiles (24, 25 and 26, 27 respectively) fitted on to the end walls (21, 22).

12. A self-propelled harvester according to claim 9 **characterised in that** the reinforcing profiles (24-27) are of a hollow configuration.

13. A self-propelled harvester according to one or more of the preceding claims **characterised in that** the cavities (33) of the reinforcing profiles (24-27) are in the form of lubricant passages (36).

14. A self-propelled harvester according to one or more of the preceding claims **characterised in that** on their inside the end walls (21, 22) are equipped with at least one scraper bar (37, 38).

15. A self-propelled harvester according to one or more of the preceding claims **characterised in that** the scraper bars (37, 38) are arranged to face in the direction of rotation (30, 31) of the separating rotor (11, 12) associated with them.

16. A self-propelled harvester according to claim 15 **characterised in that** the scraper bars (37, 38) are of a straight or curved configuration.

17. A self-propelled harvester according to one or more of the preceding claims **characterised in that** the end edges (39, 40) of the rotor screw plates (41, 42) co-operate with the scraper bars (37, 38) in the direction of conveying the crop material outwardly.

## Revendications

1. Machine de récolte automotrice, notamment moissonneuse-batteuse avec au moins un rotor de séparateur entraîné et disposé au moins partiellement dans un carter de rotor, dont l'extrémité antérieure vu dans la direction de déplacement est supportée par au moins un palier dans une paroi frontale, qui masque localement l'ouverture d'entrée du carter de rotor, **caractérisée par le fait qu'**au moins un des bords (17-20) inférieurs d'une paroi frontale (21, 22), qui s'étendent en direction de l'extérieur à partir du palier (15, 16), au nombre d'au moins un, occupe une position qui diffère de l'horizontale.

2. Machine de récolte automotrice selon la revendication 1, **caractérisée par le fait qu'**au rotor de séparateur (11), au nombre d'au moins un, est associé au moins un rotor de séparateur (12) supplémentaire entouré d'un carter de rotor (10) et que le rotor de séparateur (12) supplémentaire, au nombre d'au moins un, à son extrémité tournée dans la direction de déplacement FR, est supporté par au moins un palier (16) lié à une paroi frontale (22) qui présente des bords (29, 30) inférieurs.

3. Machine de récolte automotrice selon une ou plusieurs des revendications précédentes, **caractérisée par le fait que** les deux bords (17, 18 et 19, 20) inférieurs de chacune des parois frontales (21, 22) forment un angle (α) obtus.

4. Machine de récolte automotrice selon une ou plusieurs des revendications précédentes, **caractérisée par le fait qu'**au moins un des bords (17-20) inférieurs est courbé.

5. Machine de récolte automotrice selon une ou plusieurs des revendications précédentes, **caractérisée par le fait que** la courbure d'au moins un des bords (17-20) inférieurs courbes est dirigée vers le haut vu dans la direction verticale.

6. Machine de récolte automotrice selon une ou plusieurs des revendications précédentes, **caractérisée par le fait que** les bords (17-20) inférieurs courbes des parois frontales (21, 22) du rotor de séparateur (11, 12) concerné sont mutuellement décalés dans le sens de rotation (30, 31) du rotor de séparateur (11, 12) concerné.

7. Machine de récolte automotrice selon la revendication 6, **caractérisée par le fait que** le bord (18, 19) inférieur opposé au sens de rotation du rotor de séparateur (11, 12) est plus fortement incliné dans la direction verticale que le bord (17, 20) inférieur en retard sur ledit bord (18, 19) inférieur, vu dans le sens de rotation (30, 31) du rotor de séparateur (11, 12) concerné.

8. Machine de récolte automotrice selon une ou plusieurs des revendications précédentes, **caractérisée par le fait que** la paroi frontale (21) d'un premier rotor de séparateur (11) avec ses bords (17, 18) inférieurs et la paroi frontale (22) d'un second rotor de séparateur (12) avec ses bords (19, 20) inférieurs sont disposées de manière symétrique l'une par rapport à l'autre.

9. Machine de récolte automotrice selon une ou plusieurs des revendications précédentes, **caractérisée par le fait que** les parois frontales (21, 22), dans la région de leurs bords (17-20) inférieurs, présentent une section transversale profilée.

10. Machine de récolte automotrice selon une ou plusieurs des revendications précédentes, **caractérisée par le fait que** les bords (17-20) inférieurs sont conformés en profilés creux.

11. Machine de récolte automotrice selon une ou plusieurs des revendications précédentes, **caractérisée par le fait que** les bords (17-20) inférieurs des parois frontales (21, 22) sont formés par des profilés de renfort (24, 25 et 26, 27) placés sur les parois frontales (21, 22).

12. Machine de récolte automotrice selon la revendication 9, **caractérisée par le fait que** les profilés de renfort (24-27) sont creux.

13. Machine de récolte automotrice selon une ou plusieurs des revendications précédentes, **caractérisée par le fait que** les cavités (33) des profilés de renfort (24-27) sont conformées en canaux de lubrification (36).

14. Machine de récolte automotrice selon une ou plusieurs des revendications précédentes, **caractérisée par le fait que** les parois frontales (21, 22) sur leur face intérieure, sont munies d'au moins une barre racleuse (37, 38).

15. Machine de récolte automotrice selon une ou plusieurs des revendications précédentes, **caractérisée par le fait que** les barres racleuses (37, 38) sont disposées tournées dans le sens de rotation du rotor de séparateur (11, 12) associé.

16. Machine de récolte automotrice selon la revendication 15, **caractérisée par le fait que** les barres racleuses (37, 38) sont droites ou courbes.

17. Machine de récolte automotrice selon une ou plusieurs des revendications précédentes, **caractérisée par le fait que** les bords (39, 40) frontaux des tôles (41, 42) formant la vis de rotor coopèrent avec les barres racleuses (37, 38) à des fins de transport du produit de récolte vers l'extérieur.
